(19) **Europäisches Patentamt**
**European Patent Office**
**Office européen des brevets**

(11) **EP 2 861 024 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(51) Int Cl.:
*H04W 52/34* *(2009.01)*

(21) Anmeldenummer: **14187902.3**

(22) Anmeldetag: **07.10.2014**

(54) **Verfahren zur Steuerung der Sendeleistung**

Method for controlling transmission power

Procédé de commande de la puissance d'émission

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2013 DE 102013220371**
**28.10.2013 DE 102013221866**

(43) Veröffentlichungstag der Anmeldung:
**15.04.2015 Patentblatt 2015/16**

(73) Patentinhaber: **Deutsches Zentrum für Luft- und Raumfahrt e.V.**
**51147 Köln (DE)**

(72) Erfinder:
- **Lázaro Blasco, Francisco**
**80686 München (DE)**
- **Scalise, Sandro**
**81245 München (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
- **Technical Specification: "Satellite Earth Stations and Systems (SES); Air Interface for S-band Mobile Interactive Multimedia (S-MIM); Part 3: Physical Layer Specification, Return Link Asynchronous Access", , 6. August 2013 (2013-08-06), Seiten 2013-8, XP055167633, Gefunden im Internet: URL:http://www.etsi.org/deliver/etsi_ts/10 2700_102799/10272103/01.02.01_60/ts_102721 03v010201p.pdf [gefunden am 2015-02-05]**

## Beschreibung

Die Erfindung betrifft ein Verfahren zur Steuerung der Sendeleistung (Energie pro Symbol), mit der in einem Kommunikationssystem Signale von Sendern einer Gruppe von mehreren Sendern zu einem dieser Gruppe zugeordneten Empfänger paketweise gemäß einer Multiplexvorgabe, insbesondere Zufallszugriffsvorgabe, übertragen werden.

Mit dieser Erfindung wird eine neue Technik vorgeschlagen, mit der eine Leistungssteuerung durchgeführt werden kann, wenn eine Zufallszugriffstechnik zum Zugreifen auf ein gemeinsames Übertragungsmedium verwendet wird.

Beim Zufallszugriff handelt es sich um eine Technik zum Übertragen von Information über ein Übertragungsmedium, bei der mehrere Endgeräte das Übertragungsmedium gemeinsam benutzen. Bei Zufallszugriffstechniken ist keine zentrale Steuereinheit vorhanden, die den Zugriff auf das Übertragungsmedium steuert.

Ein Beispiel für eine Zufallszugriffstechnik ist das Aloha-Protokoll, bei dem jeder Teilnehmer seine Datenpakte zu jeder Zeit und asynchron sendet. Falls mehr als ein einziger Teilnehmer gleichzeitig eine Übertragung vornimmt, kollidieren die Datenpakete und könnten verlorengehen.

Es existieren weitere Zufallszugriffstechniken, mit denen ein höherer Durchsatz erzielt wird. Eine Technik, die sehr große Aufmerksamkeit erfahren hat, ist diejenige mit Spread Spectrum Aloha (SSA) mit Successive Interference Cancellation (SIC) am Empfänger. Wenn diese Technik ähnlich wie bei Aloha verwendet wird, senden die Endgeräte ihre Pakete zu jeder Zeit und in asynchroner Weise unter Verwendung von Spreiz-Spektrum-Techniken. Am Empfänger tritt im Wesentlichen eine Kollision der Pakete auf. Aufgrund der verwendeten Spreiz-Technik jedoch können Pakete auch dann dekodiert werden, wenn sie Kollisionen erleiden. Ein Standard-SSA-Empfänger versucht, jeweils ein Paket auf einmal zu dekodieren, wobei er den Rest der Pakete als Interferenz behandelt. Bei einem weiter fortentwickelten Empfänger wird die SIC am Empfänger verwendet. Mit anderen Worten speichert der Empfänger die empfangene Wellenform während eines Zeitfensters mit einer Länge T. Innerhalb dieses Fensters beginnt der Empfänger mit dem Dekodieren des Paktes mit dem höchsten $E_s/(N_0 + I)$. Falls das Paket erfolgreich dekodiert wird, rekonstruiert der Empfänger die Wellenform aus diesem Paket und löscht es in seinem Fenster. Damit wird die für sämtliche anderen Pakete erzeugte Interferenz aufgehoben. Der Empfänger sucht unter denjenigen Paketen, die noch in seinem Fenster vorhanden sind, das Paket mit der höchsten Energie, dekodiert es und hebt die Interferenz auf, und der Vorgang wird wiederholt, bis keine weiteren Pakete mehr vorhanden sind.

Wenn SSA mit SIC verwendet wird, spielt die Leistung, mit der die verschiedenen Pakete empfangen werden, eine zentrale Rolle in dem Dekodiervorgang. Tatsächlich kann, falls sämtliche Pakete mit der gleichen Leistung empfangen werden, die SIC die Last in Bezug auf die Standard-Dekodierung nicht erhöhen. Falls jedoch die Leistung, mit der die Pakete empfangen werden, der korrekten Verteilung folgt, kann die SIC an dem Empfänger den Durchsatz des SSA beträchtlich erhöhen.

Wir werden die Rolle der Leistungsverteilung der Pakete anhand eines einfachen Beispiels veranschaulichen. Es sei ein mit Slots betriebenes SSA-Schema angenommen, bei dem eine feste Anzahl von Teilnehmern M in jedem Zeit-Slot ein Paket sendet. Für sämtliche Pakete wird der gleiche Übertragungsmodus verwendet (Physical- und Link-Layer-Übertragungsparameter: Modulation, Kodierschema etc.). Es sei, $\gamma_{req}$ definiert als das minimal erforderliche $E_s/(N_0 + I)$, das ein Burst haben muss, um korrekt dekodiert werden zu können (Es= P/fs, wobei fs die verwendete Symbolrate ist). P(i) bezeichnet die Leistung, mit der das i-te Paket empfangen wurde. Der Einfachheit halber werden wir die Teilnehmer in absteigender Reihenfolge entsprechend ihrer Leistung P anordnen, so dass P(1)>P(2)>...P(M-1) > P(M) ist. Das effektive $E_s/(N_0 + I)$ für das Paket "i" beim Dekodieren definieren wir als:

$$\gamma(i) = \frac{E_s}{N_0 + I(i)}$$

wobei

$$I_{eff}(k) = \sum_{i=1}^{k-1} P(i)$$

die Interferenz von sämtlichen Teilnehmern ist, bei denen noch keine Dekodierung vorgenommen worden ist.

Wir nehmen an, dass jedes Mal, wenn $\gamma(i) > \gamma_{req}$ ist, das Paket "i" mit einer Wahrscheinlichkeit 1 dekodiert wird. Falls $\gamma(i) < \gamma_{req}$ ist, gehen das Paket "i" und sämtliche nachfolgenden Pakete verloren (Pakete i,i+1... M).

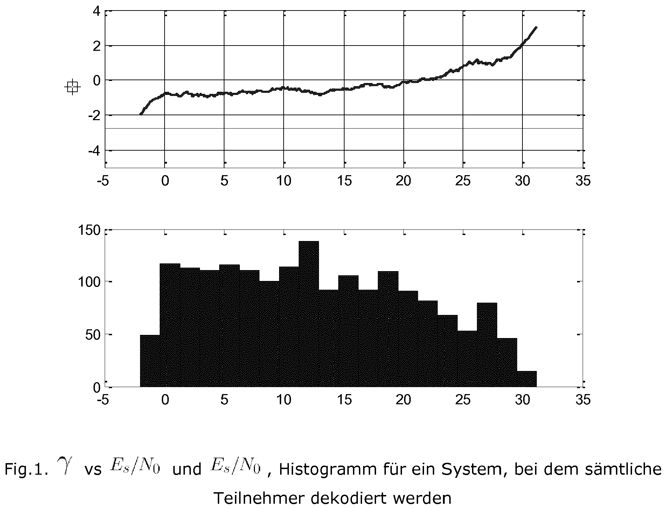

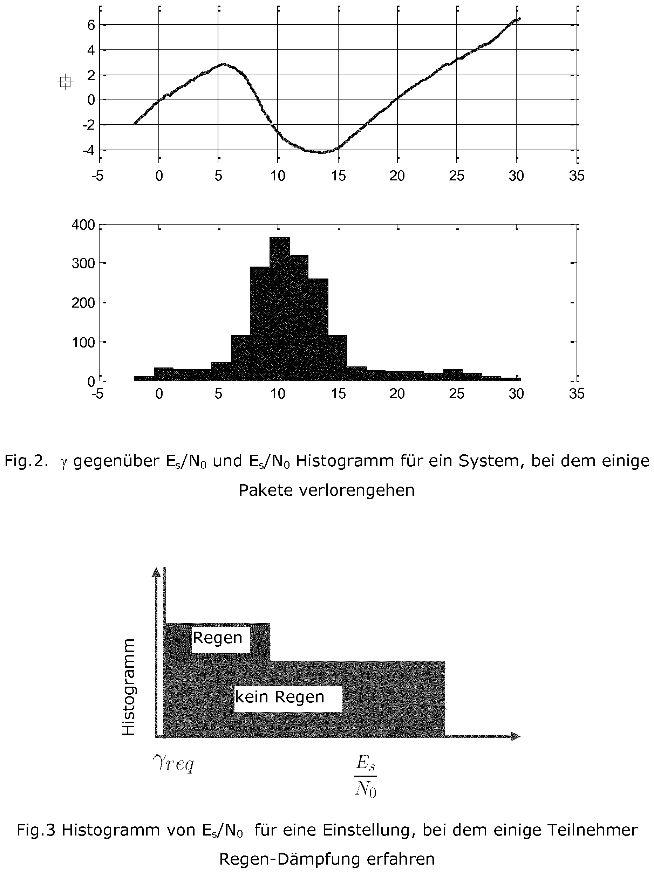

Zur Veranschaulichung der Auswirkung der Leistungsverteilung auf die Leistungsfähigkeit des Systems werden wir zwei Beispiele aufführen. In Fig. 1 sehen wir im oberen Teil den Verlauf von $\gamma$ über dem Verhältnis $E_s/N_0$ (in dB) für die verschiedenen Teilnehmer. Die schwarze horizontale Grenzlinie zeigt $\gamma_{req}$ = -2,7 dB, wobei der Graph $\gamma$ über $E_s/N_0$ repräsentiert. In diesem Fall können, da $\gamma(i) > \gamma_{req} \; \forall i$ gilt, sämtliche Pakete dekodiert werden. Der untere Teil der Fig. 1 zeigt das Histogramm des Verhältnisses $E_s/N_0$ (in dB). In Fig. 2 zeigen wir das gleiche Schaubild für ein überladenes System, in dem einige Pakete verlorengehen. Konkret können sämtliche Teilnehmer, bei denen $E_s/N_0$ unter 10 dB liegt, nicht dekodiert werden. Die Anzahl der Teilnehmer ist in den beiden Beispielen der Fign. 1 und 2 gleich, wobei der einzige Unterschied in der Leistungsverteilung der Pakete besteht.

Eine gute Leistungsverteilung führt zu einer Kurve von $\gamma$ über $E_s/N_0$ (in dB), bei der $\gamma(i) > \gamma_{req} \; \forall i$ ist. Im Idealfall gilt $\gamma(i) = \gamma_{req} \; \forall i$, was sich bei Verwendung einer gleichförmigen Verteilung für $E_s/N_0$ (in dB) ergibt.

Mit dieser Erfindung beschreiben wir einen Leistungssteuermechanismus, der es möglich macht, die Leistungsverteilung der empfangenen Pakete in einer weiten Vielfalt von Situationen zu steuern.

Im Stand der Technik besteht Kenntnis darüber, dass die Leistungsverteilung der Pakete am Empfänger von zentraler Wichtigkeit für SSA mit SIC ist. In [1] zeigen die Autoren auf, dass, falls die Leistung der Pakete einer Lognormal-Verteilung folgt, der Durchsatz erhöht werden kann, falls die Standard-Abweichung der Lognormal-Abweichung zunimmt. Bei S-MIM [2], einem ETSI-Standard, von dem als Stand der Technik in Anspruch 1 ausgegangen wird, wird SSA mit SIC an dem Empfänger für Mobil-Satelliten-Kommunikationsvorgänge verwendet. Um die Leistungsverteilung der eintreffenden Pakete zu verbessern, kann bei den Endgeräten ein gleichförmig verteilter Leistungs-Backoff in dB angewandt werden. Ein Endgerät setzt seine Übertragungsleistung auf:

$$P = L + N_{SAT} + K + R_{rand} \; \text{dBm}$$

wobei

- L die geschätzte Dämpfung ist, die das Endgerät in dem Rückwärts-Link erleidet.
- $N_{SAT}$ der Rausch- und Interferenz-Leistungspegel an dem Empfänger ist. Diese Parameter werden von dem Empfänger berechnet und über den Vorwärts-Link an sämtliche Endgeräte gesendet.
- $R_{rand}$ ein Zufallswert ist, der gleichförmig zwischen 0 und $R_{max}$ verteilt ist. Der Parameter $R_{max}$ wird ebenfalls von dem Empfänger berechnet und über den Vorwärts-Link an sämtliche Endgeräte gesendet.
- K definiert ist als C/(N0+ I0)|T - GS, wobei C/(N0+ I0)|T der Zielwert für die das gewünschte Verhältnis aus C/(N0+ I0) am Satelliten-Transponder-Eingang und GS die Satellitenantennenverstärkung im Randbereich der Strahlungsabdeckung der Antenne auf dem Erdboden ist.

In dem Fall, dass die benötigte Leistung P die Endgeräte-Kapazität überschreitet, sendet das Endgerät nicht. S-MIM ist ein Mobil-Satelliten-Kommunikationssystem, weshalb sich nach einiger Zeit das Endgerät bewegt, die Weg-Dämpfung abnimmt und das Endgerät senden kann.

Im Folgenden führen wir mehrere Beispiele auf, bei denen das SSA mit SIC an dem Empfänger in Satelliten-Kommunikationsvorgängen verwendet wird, und bei denen die gemäß [2] verwendete Technik verbessert werden kann.

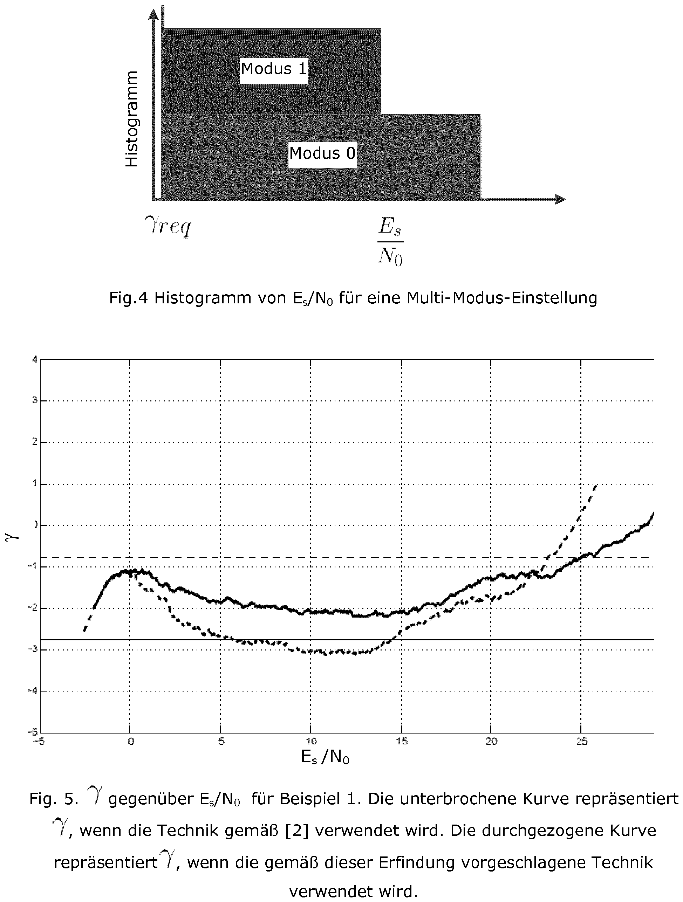

- In dem ersten Beispiel nehmen wir einen Satelliten-Strahl in dem Rückwärts-Link an, bei dem eine Anzahl $q$ der Teilnehmer eine Dämpfung durch Regen erleidet. Fig. 3 zeigt das Histogramm von $E_s/N_0$ (in dB) für sämtliche Pakete bei Verwendung der in [2] beschriebenen Technik zur Leistungssteuerung. Aus Fig. 3 ist offensichtlich, dass die Verteilung von $E_s/N_0$ (in dB), mit der die Pakete empfangen werden, bei Weitem keine gleichförmige Verteilung ist. Es existiert eine höhere Konzentration von Paketen mit niedrigen Werten von $E_s/N_0$. Der Grund dafür besteht darin, dass es für den Anteil $q$ von Teilnehmern, die eine Dämpfung durch Regen erfahren, unmöglich ist, hohe Werte von $E_s/N_0$ zu erreichen.
- In dem zweiten Beispiel nehmen wir einen Satelliten-Strahl in dem Rückwärts-Link an, bei dem nicht sämtliche der Teilnehmer den gleichen Übertragungs-Modus verwenden (physische und Link-Layer-Konfiguration). Wir nehmen an, dass zwei Übertragungsmodi verwendet werden, die das gleiche Modulations- und Kodierungsschema benutzen und die gleiche Übertragungsbandbreite einnehmen. Der verwendete Spreizfaktor ist jedoch bei den beiden Modi unterschiedlich. In dem Modus 0 wird ein Spreizfaktor 256 verwendet, während in dem Modus 1 ein Spreizfaktor 64 verwendet wird. Wir nehmen an, dass sämtliche Endgeräte die gleiche Maximal-Übertragungsleistung haben. Bei Verwendung der Leistungssteuerung gemäß [2] erhält man das in Fig. 4 gezeigte Histogramm von $E_s/N_0$ (in dB). Auch hier ist die Verteilung von $E_s/N_0$ nicht gleichförmig. Wiederum existiert eine höhere Konzentration von Paketen mit niedrigen Werten von $E_s/N_0$. Der Grund dafür besteht nun darin, dass nur Teilnehmer aus dem Modus 0 heraus den höheren Bereich von $E_s/N_0$ erzielen können.
- Die in [2] beschriebene Technik ist für Mobil-Satellitenkommunikationsvorgänge geeignet, bei denen Fade-Ereignisse dadurch verursacht werden, dass der Weg zu dem Satelliten z.B. durch ein Gebäude blockiert wird. Da sich die Teilnehmer bewegen, tendieren Fade-Ereignisse dazu, von kurzer Dauer zu sein. Anders ausgedrückt besteht nach einer kurzen Zeit die Wahrscheinlichkeit, dass das Endgerät gute Ausbreitungsbedingungen hat. Die in [2] beschriebene Technik ist jedoch für Fest-Satellitenkommunikationsvorgänge nicht geeignet, da das Fade-Ereignis lang sein kann. Fade-Ereignisse werden normalerweise durch Regen verursacht, der Minuten oder sogar Stunden andauern kann. Falls die in [2] beschriebene Technik verwendet wird, müssen Teilnehmer mit "schlechten" Ausbreitungsbedingungen möglicherweise lange Zeit warten, bis sie in der Lage sind zu senden. Ihre Ausbreitungsbedingungen wären jedoch gut genug, um eine fehlerfreie Übertragung zu erzielen.

Mit der Erfindung wird ein Verfahren zur Steuerung der Sendeleistung (Energie pro Symbol), mit der in einem Kommunikationssystem Signale von Sendern einer Gruppe von mehreren Sendern zu einem dieser Gruppe zugeordneten Empfänger paketweise gemäß einer Multiplexvorgabe, insbesondere Zufallszugriffsvorgabe, übertragen werden, vorgeschlagen, wobei das Verfahren die Merkmale des Anspruchs 1 aufweist. Einzelne Ausgestaltungen der Erfindung sind jeweils Gegenstand der Unteransprüche.

Erfindungsgemäß wird bei dem Verfahren vorteilhafterweise

- eine erste Tabelle bereitgestellt, in der verschiedene jeweils durch einen unteren Grenzwert und einen oberen Grenzwert definierte Sendeleistungssegmente des Gesamtsendeleistungsbereichs angegeben sind,
- eine zweite Tabelle bereitgestellt, in der für jedes Sendeleistungssegment ein statistischer Wahrscheinlichkeitswert enthalten ist, der angibt, wie viele Sender mit einer innerhalb des betreffenden Sendeleistungssegments liegenden Sendeleistung sendet,
- wobei jeder Wahrscheinlichkeitswert der zweiten Tabelle einem anderen Sendeleistungssegment zugeordnet ist, womit durch die beiden Tabellen die Erwartung definiert wird, wie viele Sender der Gruppe Signale mit einer innerhalb des jeweiligen Sendeleistungssegments liegenden Sendeleistung senden,
- für jeden Sender eine Zufallszahl bereitgestellt (entweder durch den Sender selbst oder von außerhalb), anhand derer den jeweiligen Sendern zuzuordnende Wahrscheinlichkeitswerte als deren zugeordnete Parameter berechnet und werden damit jedem Sender das Sendeleistungssegment zugewiesen wird, innerhalb dessen die Sendeleistung liegt, mit der der betreffende Sender sendet, und
- die Größe der Sendeleistung, mit der der betreffende Sender sendet, innerhalb des diesem Sender zugeordneten Sendeleistungssegments durch eine weitere anhand einer Zufallszahl erfolgende Berechnung ausgewählt.

Gemäß einer vorteilhaften Ausgestaltung der Erfindung ist vorgesehen, dass jeder Sender eine Maximalsendeleistung aufweist, dass jeder Sender demjenigen Sendeleistungssegment zugeordnet wird, innerhalb dessen seine Maximalsendeleistung liegt, dass für jeden Sender eine unter Berücksichtigung einer gleichmäßigen Verteilung auf einen vorgebbaren Zahlenraum berechnete Zufallszahl bereitgestellt wird (entweder von dem Sender selbst oder von außerhalb), anhand derer unter Zuhilfenahme des Wahrscheinlichkeitswerts für das dem betreffenden Sender zugeordnete Sendeleistungssegment ermittelt wird, ob die Sendeleistung des Senders zwischen der Untergrenze des betreffenden Sendeleistungssegments und einer Maximalsendeleistung oder zwischen der Untergrenze des Gesamtsendeleistungsbereichs und seiner Maximalsendeleistung liegt.

Ferner ist es zweckmäßig, dass jeder Sender eine Maximalsendeleistung aufweist, dass jeder Sender demjenigen Sendeleistungssegment zugeordnet wird, innerhalb dessen seine Maximalsendeleistung liegt, dass für jeden Sender eine unter Berücksichtigung einer gleichmäßigen Verteilung auf einen vorgebbaren Zahlenraum berechnete Zufallszahl bereitgestellt wird, die statistisch gleich verteilt innerhalb des Zahlenraums und insbesondere zwischen Null und Eins liegen kann, und dass der betreffende Sender

- dann, wenn seine Zufallszahl größer ist als der Wahrscheinlichkeitswert für das Sendeleistungssegment oder gleich dem Wahrscheinlichkeitswert für das Sendeleistungssegment, dem der Sender zugeordnet ist, mit einer Sendeleistung sendet, die zwischen der Untergrenze des Sendeleistungssegments und der Maximalsendeleistung des Senders liegt, und
- dann, wenn seine Zufallszahl kleiner ist als der Wahrscheinlichkeitswert für das Sendeleistungssegment, dem der Sender zugeordnet ist, mit einer Sendeleistung sendet, die zwischen der unteren Grenze des Gesamtsendeleistungsbereichs und der Maximalsendeleistung des Senders liegt.

Vorteilhafterweise können die Sender in unterschiedlichen Modi, insbesondere mit unterschiedlichen Übertragungsraten (Bitraten) senden, wobei pro Modus eine Steuerung der Sendeleistungen sämtlicher Sender, wie oben beschrieben, erfolgt.

Gemäß einer vorteilhaften Ausgestaltung der Erfindung ist vorgesehen, dass vor Übertragung eines Signals vom Sender zum Empfänger und/oder in regelmäßigen oder unregelmäßigen Abständen die Steuerung der Sendeleistungen der Sender so, wie oben angegeben, erfolgt.

Bei einer bevorzugten Weiterbildung der Erfindung ist vorgesehen, dass ein Sender der Gruppe in dem Fall, dass ihm eine innerhalb eines Sendeleistungssegments liegende Sendeleistung zugewiesen wird, die seine zulässige Maximalsendeleistung übersteigt, mit einer Sendeleistung zwischen einem vorgebbaren Minimalwert und seiner Maximalsendeleistung sendet, und zwar im logarithmischen Maßstab betrachtet im Wesentlichen gleich verteilt, wenn die Maximalsendeleistung kleiner als der untere Grenzwert des betreffenden Sendeleistungssegments ist.

Mit der Erfindung schlagen wir ein neuartiges Leistungssteuerungsschema für den Rückwärts-Link eines Kommunikationssystems vor, bei dem mehrere Endgeräte mittels eines Zufallszugriff-Schemas mit einem Kommunikations-Knoten kommunizieren, den wir als Hub bezeichnen. Es werden keine Vorgaben zu dem Zufallszugriffs-Schema getroffen; dieses könnte mit Slots versehen sein oder nicht, eine Spreizung verwenden oder nicht, und es könnte Repliken verwenden oder nicht. Das Hub könnte eine Benutzungs-Interferenz-Löschung oder irgendeine andere Art von Mehr-Teilnehmer-Detektion verwenden oder nicht.

Die Endgeräte können verschiedene physische und Link-Layer-Konfigurationen (Kommunikationsmodi) verwenden, um ihre Daten zu übertragen.

Wir nehmen an, dass ein Vorwärts-Link existiert, über den das Hub Broadcast-Signale an die Endgeräte senden kann.

Das Hub sendet zwei Signalisierungstabellen an die Endgeräte: Tabelle 1 und Tabelle 2. In Tabelle 1 sind sämtliche $E_s/N_0$ -Werte in dB angegeben. Die Wahrscheinlichkeitswerte in Tabelle 2 nehmen Werte zwischen 0 und 1 an.

Tabelle 1. Signalerzeugungs-Tabelle 1.

| Modus | $E_S/N_{0_1}$ | $E_S/N_{0_2}$ | $E_s/N_{0_3}$ | ... | $E_s/N_{0_U}$ |
|---|---|---|---|---|---|
| o | $E_s/N_{0_{0,1}}$ | $E_s/N_{0_{0,2}}$ | $E_s/N_{0_{0,3}}$ | | $E_s/N_{0_{0,U}}$ |
| 1 | $E_s/N_{0_{1,1}}$ | $E_s/N_{0_{1,2}}$ | $E_s/N_{0_{1,3}}$ | | $E_s/N_{0_{1,U}}$ |
| ... | ... | ... | ... | | ... |
| m | $E_s/N_{0_{m,1}}$ | $E_s/N_{0_{m,2}}$ | $E_s/N_{0_{m,3}}$ | | $E_s/N_{0_{m,U}}$ |

Tabelle 2. Signalerzeugungs-Tabelle 2.

| Modus | $Prob_1$ | $Prob_2$ | ... | $Prob_{U-1}$ |
|---|---|---|---|---|
| 0 | $p_{0,1}$ | $p_{0,2}$ | | $p_{0,U}$ |
| 1 | $p_{1,1}$ | $p_{1,2}$ | | $p_{1,U}$ |
| ... | ... | ... | | |
| m | $p_{m,1}$ | $p_{m,2}$ | | $p_{m,U}$ |

Die Endgeräte können $E_s/N_0$ auf der Empfängerseite als Funktion ihrer Übertragungsleistung schätzen. Die Endgeräte können diesen Schätzwert unter Verwendung eines Mechanismus mit offener oder geschlossener Schleife berechnen. Die Weise, in der die Endgeräte $E_s/N_0$ am Empfänger berechnen, ist nicht Teil dieser Erfindung.

Die Endgeräte verwenden dann diese Tabellen in der folgenden Weise, um ihre Übertragungsleistung zu berechnen.

Falls ein Endgerät mit einem Übertragungsmodus "i" senden will, wird es die i-te Reihe in Tabelle 1 und Tabelle 2 verwenden.

- Das Endgerät schätzt das maximale $E_s/N_0$, die es an dem Hub durch Verwendung seiner maximalen Übertragungsleistung erreichen kann. Mit **B** bezeichnen wir das maximale $E_s/N_0$, die das Endgerät in dB erreichen kann.
- Das Endgerät erzeugt eine Pseudo-Zufallszahl *t*, die gleichförmig zwischen 0 und 1 verteilt ist.
- Das Endgerät bestimmt, was das größte n, n_max ist, für das **B** > $E_s/N_{0_{i,n}}$. Falls n_max gleich u ist, setzt das Endgerät n_max auf u-1.
- Falls t < $p_{i,n\_max}$, setzt das Endgerät $A_{min}$ = $E_s/N_0$ i,n_max und $A_{max}$ = $E_s/N_0$ i,n_max+1. Andernfalls setzt das Endgerät $A_{min}$ =$E_s/N_0$ i,1 und $A_{max}$ =$E_s/N_0$ i,u.
- Das Endgerät berechnet dann sein $E_s/N_0$ an dem Empfänger wie folgt:

---

Falls $B < E_s/N_{0_{i,1}}$

$E_s/N_0 =$ **-infinity** (Das Endgerät sendet nicht).

Sonst

Falls $B < A_{min}$

$E_s/N_0$ gleichförmig verteilt zwischen $E_s/N_{0_{i1}}$ und **B**

Sonst

Falls $B < A_{max}$

$E_s/N_0$ gleichförmig verteilt zwischen $A_{min}$ und **B**

Sonst

$E_s/N_0$ gleichförmig verteilt zwischen $A_{min}$ und $A_{max}$

Ende

Ende

Ende

---

Anzumerken ist, dass sämtliche $E_s/N_0$ -Werte in dB angegeben sind.

Anzumerken ist, dass die Anzahl der Modi beliebig sein kann (es können einer oder mehr sein). Die Anzahl $u$ der Spalten in der Tabelle kann fest oder variabel sein. Das Hub kann entscheiden, die Anzahl $u$ der Spalten dynamisch zu vergrößern oder zu reduzieren. Es sollte erwähnt werden, dass selbst bei u=2 und m=1, das vorgeschlagene Schema nicht identisch mit [2] ist. Bei der vorgeschlagenen Technik senden Endgeräte jedes Mal, wenn sie schätzen, dass sie $E_s/N_0 > E_s/N_0 i1$ erfüllen können.

Die Erfindung ist durch die folgenden Eigenschaften gekennzeichnet:

- Das Hub sendet eine Tabelle mit u $E_s/N_0$ -Werten, wodurch (*u-1*) $E_s/N_0$ -Segmente für jeden Sende-Modus definiert werden.
- Das Hub sendet eine Tabelle mit (*u-1*) Wahrscheinlichkeitswerten der Verwendung jedes der $E_s/N_0$ -Segmente.
- Entsprechend der Tabelle mit den Wahrscheinlichkeitswerten wählen die Endgeräte willkürlich ein $E_s/N_0$, indem sie ihren $E_s/N_0$ gleichförmig zufällig wählen.
- Endgeräte senden, wann immer sie ein $E_s/N_0$ erzielen können, das über $E_s/N_0 i1$ liegt.

Beispiel 1

Wir betrachten den Rückwärts-Link eines Satelliten-Kommunikationssystems, und wir konzentrieren uns auf einen der Strahlen des Rückwärts-Links. Die Endgeräte senden mittels SSA, und der Empfänger verwendet SIC. Sämtliche Endgeräte verwenden den gleichen Übertragungsmodus:

- BPSK-Modulation
- Code-Rate = 1/3
- Spreizfaktor 256.
- 2500 Teilnehmer

Für den Link eines in der Mitte des Strahls befindlichen Endgeräts gilt 29 dB.

Der Link-Budget-Verlust aufgrund der Position eines Endgeräts in dem Strahl ist $L_b$ und folgt einer gleichförmigen Verteilung (-6,0 dB). Der Endgeräte-Schätzwert von $L_b$, $\hat{L}_b$ hat eine Gauß-Verteilung in dB mit einem Mittelwert $L_b$ und einer Standard-Abweichung von 0,5 dB.

Ein Anteil von 25% der Endgeräte erfährt eine Regen-Dämpfung. Die Regen-Dämpfung $L_r$ hat eine Gauß-Verteilung in dB mit einem Mittelwert von -10 dB und einer Standard-Abweichung von 1 dB. Der Endgeräte-Schätzwert der Regendämpfung $\hat{L}_r$ hat eine Gauß-Verteilung in dB und hat einen Mittelwert $L_r$ und eine Standard-Abweichung von 1 dB.

Fig. 5 zeigt ein Diagramm von $\gamma$ über $E_s/N_0$ (in dB) für die in [2] beschriebene Leistungssteuerung (als unterbrochene Linie) und für die mit dieser Erfindung vorgeschlagene Leistungssteuerung (als durchgezogene Linie) unter Verwendung der folgenden Signalisierungstabellen:

| Mode | Es/No_1 | Es/No_2 | Es/No_3 | Es/No_4 |
|------|---------|---------|---------|---------|
| 1 | -0,8 | 14,2 | 22,2 | 31,2 |

| Mode | p_1 | p_2 | p_3 |
|------|-----|-----|-----|
| 1 | 0,0 | 0,13 | 0,1 |

Es ist ersichtlich, wie bei der in [2] beschriebenen Leistungssteuerung für einem Bereich von Werten von $E_s/N_0$ der Wert $\gamma$ unter $\gamma_{req}$ fällt. Bei Verwendung dieser Erfindung jedoch gilt $\gamma > \gamma_{req}$ im gesamten Bereich von $E_s/N_0$, außer für sehr niedrige Werte von $E_s/N_0$. Unter gleichen Bedingungen ermöglicht die hier vorgeschlagene Leistungssteuerungstechnik im Vergleich zu der in [2] beschriebenen Technik eine Erhöhung des Durchsatzes um 10%.

Zur besseren Erläuterung der Erfindung werden wir einige Details zu dem Empfänger-Verarbeitungsvorgang aufführen. Unter den 2500 Endgeräten, die senden:

- wählen durchschnittlich 0,0 x 2500 = 0 Endgeräte das Es/No -Segment von -0,8 bis 12,2,
- wählen durchschnittlich 0,13 x 2500 = 325 Endgeräte das Es/No -Segment von 12,2 bis 22,2,
- wählen durchschnittlich 0,10 x 2500 = 250 Endgeräte das Es/No -Segment von 22,2 bis 31,2,
- wählen durchschnittlich (1-0,04-0,17) x 2500 = 1925 250 Endgeräte das Es/No -Segment von -0,8 bis 31,2.

Lasst uns annehmen, dass ein Endgerät sein maximales Es/No , **B**, dahingehend einschätzt, dass es 33 dB beträgt. Dieses Endgerät würde eine gleichmäßig verteilte Zufallszahl t zwischen 0 und 1, erzeugen.

- Falls t < 0,1 ist, wählt das Endgerät seine Übertragungsleistung derart, dass Es/No an dem Hub gleichmäßig zwischen Es/No_3 = 22,2 dB und Es/No_3 = 31,2 dB verteilt ist.
- Falls t > 0,1 ist, wählt das Endgerät seine Übertragungsleistung derart, dass Es/No an dem Hub gleichmäßig zwischen Es/No_1 = -0,8 dB and Es/No_3 = 31,2 dB verteilt ist.

Lasst uns annehmen, dass ein zweites Endgerät sein maximales Es/No, **B,** dahingehend einschätzt, dass es 25 dB beträgt. Dieses Endgerät würde eine gleichmäßig verteilte Zufallszahl zwischen 0 und 1, t, erzeugen.

- Falls t < 0,1 ist, wählt das Endgerät seine Übertragungsleistung derart, dass Es/No an dem Hub gleichmäßig zwischen Es/No_3 = 22,2 dB und **B** = 25 dB verteilt ist.
- Falls t > 0,1 ist, wählt das Endgerät seine Übertragungsleistung derart, dass Es/No an dem Hub gleichmäßig zwischen Es/No_1 = -0,8 dB and **B** = 25 dB verteilt ist.

Lasst uns annehmen, dass ein drittes Endgerät sein maximales Es/No, **B**, dahingehend einschätzt, dass es -3 dB beträgt. Dieses Endgerät würde überhaupt nicht senden, da sein maximales geschätztes Es/No kleiner als Es/No ist.

Um eine Übertragungsleistung derart zu erzeugen, dass Es/No an dem Hub gleichförmig zwischen Z1 dB und Z2 dB (Z1<Z2) verteilt ist, kann das Endgerät z.B. eine gleichförmig verteilte Zufallszahl h zwischen 0 und 1 erzeugen. Es/No wird dann berechnet als Es/No = Z1 + (Z2-Z1) x h.

Wir führen auch ein Beispiel der Weise an, in der das Endgerät Es/No an dem Hub schätzen kann.

- Das Endgerät sendet eine Meldung mit einer Übertragungsleistung Pa in dB über den Zufallszugriffskanal.
- Das Hub antwortet auf diese Meldung, indem es das Es/No="Es/No a" in dB angibt, mit dem das Paket empfangen wurde.
- Das Endgerät empfängt diese Meldung und "weiß", dass die Leistung Pa in dB das Es/No a in dB erzeugt. Nun kann das Endgerät das durch eine Übertragungsleistung erzeugte Es/No berechnen. Beispielsweise wird unter Verwendung der Übertragungsleistung Pa-3 in dB ein Es/No="Es/No a" - 3 dB an dem Hub berechnet.

Mit diesem Verfahren kann das Endgerät auch **B** berechnen, das maximale Es/No, welches es an dem Hub erzeugen kann.

Beispiel 2

In diesem zweiten Beispiel betrachten wir einen ähnlichen Fall wie in Beispiel 1, bei dem keine Endgeräte mit Regen-Dämpfung vorhanden sind und zwei Übertragungsmodi vorliegen, welche die gleiche Modulation und Kodierung benutzen und die gleiche Bandbreite einnehmen, wobei jedoch der Modus 1 einen Spreizfaktor 256 und der Modus 2 einen Spreizfaktor 64 hat. Wir nehmen ein System mit 1200 Teilnehmern mit dem Modus 1 und 300 Teilnehmern mit dem Modus 2 an.

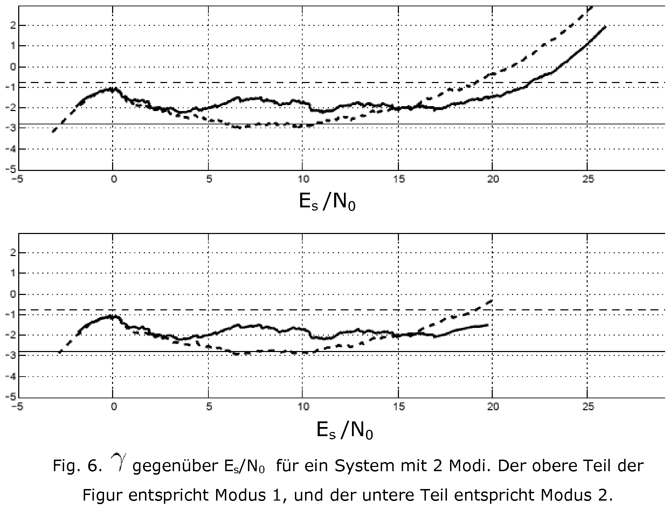

In Fig. 6 sehen wir ein Diagramm von $\gamma$ über $E_s/N_0$ (in dB) für die in [2] beschriebene Leistungssteuerung (als unterbrochene Linie) und für die mit dieser Erfindung vorgeschlagene Leistungssteuerung (als durchgezogene Linie) unter Verwendung der folgenden Signalisierungstabellen:

| Modus | Es/No_1 | Es/No_2 | Es/No_3 | Es/No_4 |
|---|---|---|---|---|
| 1 | -0,8 | 2,2 | 17,2 | 31,2 |
| 2 | -0,8 | 2,2 | 17,2 | 31,2 |

| Modus | p_1 | p_2 | p_3 |
|---|---|---|---|
| 1 | 0,05 | 0,6 | 0,25 |
| 2 | 0 | 0 | 0 |

Es ist ersichtlich, dass bei der in [2] beschriebenen Leistungssteuerung für einen Bereich von Werten von $E_s/N_0$ für die beiden Übertragungsmodi der Wert $\gamma$ unter $\gamma_{req}$ fällt. Bei Verwendung dieser Erfindung jedoch gilt $\gamma > \gamma_{req}$ im gesamten Bereich von $E_s/N_0$ und für die beiden Übertagungsmodi. Unter gleichen Bedingungen ermöglicht die hier vorgeschlagene Leistungssteuerungstechnik im Vergleich zu der in [2] beschriebenen Technik eine Erhöhung des Durchsatzes um 10%.

## Literaturverzeichnis

[1] R. De Gaudenzi, O. Del Rio Herrero, "Advances in Random Access protocols for satellite networks", 2009 International Workshop on Satellite and Space Communications, IWSSC 2009, Siena, Italien

[2] ETSI TS 102 721-3 V1.2.1 "Satellite Earth Stations and Systems (SES);Air Interface for S-band Mobile Interactive Multimedia (S-MIM); Part 3: Physical Layer Specification, Return Link Asynchronous Access."

## Patentansprüche

**1.** Verfahren zur Steuerung der Sendeleistung, mit der in einem Kommunikationssystem Signale von Sendern einer Gruppe von mehreren Sendern zu einem dieser Gruppe zugeordneten Empfänger paketweise gemäß einer Multiplexvorgabe übertragen werden, wobei bei dem Verfahren

- die Sendeleistungen, mit denen die Sender der Gruppe senden, innerhalb eines Gesamtsendeleistungsbereichs liegen, und
- jedem Sender ein Parameter zugeordnet wird, der angibt, wie groß die Sendeleistung ist, mit der der betreffende Sender sendet,

**dadurch gekennzeichnet ,**

- **dass** der Parameter anhand einer Zufallszahl sowie anhand von Wahrscheinlichkeitswerten dafür berechnet wird, wie viele Sender der Gruppe mit jeweils einer Sendeleistung senden, die innerhalb verschiedener, vorgebbarer und ihrerseits ebenfalls innerhalb des Gesamtsendeleistungsbereichs liegender Sendeleistungssegmente liegen.

**2.** Verfahren nach Anspruch 1, **dadurch gekennzeichnet, dass** bei dem Verfahren

- eine erste Tabelle bereitgestellt wird, in der verschiedene jeweils durch einen unteren Grenzwert und einen oberen Grenzwert definierte Sendeleistungssegmente des Gesamtsendeleistungsbereichs angegeben sind,
- eine zweite Tabelle bereitgestellt wird, in der für jedes Sendeleistungssegment ein statistischer Wahrscheinlichkeitswert enthalten ist, der angibt, wie viele Sender mit einer innerhalb des betreffenden Sendeleistungssegments liegenden Sendeleistung senden,
- wobei jeder Wahrscheinlichkeitswert der zweiten Tabelle einem anderen Sendeleistungssegment zugeordnet ist, womit durch die beiden Tabellen die Erwartung definiert wird, wie viele Sender der Gruppe Signale mit einer innerhalb des jeweiligen Sendeleistungssegments liegenden Sendeleistung senden,

- für jeden Sender eine Zufallszahl bereitgestellt wird, und zwar entweder durch den Sender selbst oder von außerhalb des Senders, anhand derer den jeweiligen Sendern zuzuordnende Wahrscheinlichkeitswerte als deren zugeordnete Parameter berechnet werden und damit jedem Sender das Sendeleistungssegment zugewiesen wird, innerhalb dessen die Sendeleistung liegt, mit der der betreffende Sender sendet, und

- die Größe der Sendeleistung, mit der der betreffende Sender sendet, innerhalb des diesem Sender zugeordneten Sendeleistungssegments durch eine weitere anhand einer weiteren Zufallszahl erfolgende Berechnung ausgewählt wird.

3. Verfahren nach Anspruch 1, **dadurch gekennzeichnet, dass** jeder Sender eine Maximalsendeleistung aufweist, dass jeder Sender demjenigen Sendeleistungssegment zugeordnet wird, innerhalb dessen seine Maximalsendeleistung liegt, dass für jeden Sender eine unter Berücksichtigung einer gleichmäßigen Verteilung auf einen vorgebbaren Zahlenraum berechnete Zufallszahl bereitgestellt wird, und zwar entweder von dem Sender selbst oder von außerhalb des Senders, anhand derer unter Zuhilfenahme des Wahrscheinlichkeitswerts für das dem betreffenden Sender zugeordnete Sendeleistungssegment ermittelt wird, ob die Sendeleistung des Senders zwischen der Untergrenze des betreffenden Sendeleistungssegments und einer Maximalsendeleistung oder zwischen der Untergrenze des Gesamtsendeleistungsbereichs und seiner Maximalsendeleistung liegt.

4. Verfahren nach Anspruch 1, **dadurch gekennzeichnet, dass** jeder Sender eine Maximalsendeleistung aufweist, dass jeder Sender demjenigen Sendeleistungssegment zugeordnet wird, innerhalb dessen seine Maximalsendeleistung liegt, dass für jeden Sender eine unter Berücksichtigung einer gleichmäßigen Verteilung auf einen vorgebbaren Zahlenraum berechnete Zufallszahl bereitgestellt wird, die statistisch gleich verteilt innerhalb des Zahlenraums und insbesondere zwischen Null und Eins liegen kann, und dass der betreffende Sender

- dann, wenn seine Zufallszahl kleiner ist als der Wahrscheinlichkeitswert für das Sendeleistungssegment, dem der Sender zugeordnet ist, mit einer Sendeleistung sendet, die zwischen der Untergrenze des Sendeleistungssegments und der Maximalsendeleistung des Senders liegt, und

- dann, wenn seine Zufallszahl größer ist als der Wahrscheinlichkeitswert für das Sendeleistungssegment oder gleich dem Wahrscheinlichkeitswert für das Sendeleistungssegment ist, dem der Sender zugeordnet ist, mit einer Sendeleistung sendet, die zwischen der unteren Grenze des Gesamtsendeleistungsbereichs und der Maximalsendeleistung des Senders liegt.

5. Verfahren nach einem der Ansprüche 1 bis 4, **dadurch gekennzeichnet, dass** die Sender in unterschiedlichen Modi senden können und dass pro Modus eine Steuerung der Sendeleistungen sämtlicher Sender erfolgt.

6. Verfahren nach Anspruch 5, **dadurch gekennzeichnet, dass** die Sender mit unterschiedlichen Übertragungsraten senden können und dass pro Modus eine Steuerung der Sendeleistungen sämtlicher Sender erfolgt.

7. Verfahren nach einem der Ansprüche 1 bis 6, **dadurch gekennzeichnet, dass** die Steuerung der Sendeleistungen der Sender anhand der Berechnung der Parameter vor Übertragung eines Signals vom Sender zum Empfänger und/oder in regelmäßigen oder unregelmäßigen Abständen erfolgt.

8. Verfahren nach einem der Ansprüche 1 bis 7, **dadurch gekennzeichnet, dass** die Multiplexvorgabe, gemäß der in dem Kommunikationssystem Signale von Sendern einer Gruppe von mehreren Sendern zu einem dieser Gruppe zugeordneten Empfänger paketweise übertragen werden, eine Zufallszugriffsvorgabe ist.

**Claims**

1. A method for controlling transmission power, by which, in a communication system, signals of transmitters of a group of a plurality of transmitters are transmitted, in packets and according to a multiplex presetting, to a receiver assigned to this group, wherein, in said method

- the transmission powers of by which the transmitters of the group are transmitting, are situated within a total transmission power range, and

- a parameter is to be assigned to each transmitter, the parameter indicating the amount of the transmission power of the transmission performed by the respective transmitter,

**characterized in**

- **that** the parameter is computed on the basis of a random number and on the basis of probability values as to how many transmitters of the group are transmitting with a respective transmission power which is situated within different presettable transmission power segments which themselves are situated within the total transmission power range.

2. The method according to claim 1, **characterized in that**, in the method,

- a first table is made available in which different transmission power segments of the total transmission power range, each defined by a lower limit value and an upper limit value, are indicated,
- a second table is made available in which, for each transmission power segment, a statistical probability value is included which indicates how many transmitters are transmitting with a transmission power situated within the respective transmission power segment,
- wherein each probability value of the second table is assigned to a different transmission power segment, whereby, by the two tables, there is defined the expectation of how many transmitters of the group are to transmit with a transmission power situated within the respective transmission power segment,
- for each transmitter, a random number is made available, either by the transmitter itself or from outside the transmitter, wherein, on the basis of the random number, probability values to be assigned to the respective transmitters are computed as parameters assigned to them and, thus, to each transmitter, there is assigned the transmission power segment within which the transmission power with which the respective transmitter is transmitting, is situated, and
- the magnitude of the transmission power with which the respective transmitter is transmitting, is selected, within the transmission power segment assigned to this transmitter, by a further computation performed on the basis of a further random number.

3. The method according to claim 1, **characterized in that** each transmitter comprises a maximum transmission power, that each transmitter is assigned to that transmission power segment within which its maximum transmission power is situated, and that, for each transmitter, a random number, computed under consideration of a uniform distribution onto a presettable numerical range, is made available, either by the transmitter itself or from outside the transmitter, wherein, on the basis of this number, with the aid of the probability value for the transmission power segment assigned to the respective transmitter, it is detected whether the transmission power of the transmitter is situated between the lower limit of the respective transmission power segment and a maximum transmission power or between the lower limit of the total transmission power range and its maximum transmission power.

4. The method according to claim 1, **characterized in that** each transmitter comprises a maximum transmission power, that each transmitter is assigned to that transmission power segment within which its maximum transmission power is situated, and that, for each transmitter, a random number, computed under consideration of a uniform distribution onto a presettable numerical range, is made available, which can be situated, with uniform statistical distribution, between said numerical range and particularly between zero and one, and that the respective transmitter,

- if its random number is smaller than the probability value for the transmission power segment to which the transmitter is assigned, will transmit with a transmission power situated between the lower limit of the transmission power segment and the maximum transmission power of the transmitter, and
- if its random number is larger than the probability value for the transmission power segment or is equal to the probability value for the transmission power segment to which the transmitter is assigned, will transmit with a transmission power situated between the lower limit of the total transmission power range and the maximum transmission power of the transmitter.

5. The method according to any one of claims 1 to 4, **characterized in that** the transmitters are operative to transmit in different modes and that, for each mode, control of the transmission powers of all transmitters is performed.

6. The method according to claim 5, **characterized in that** the transmitters are operative to transmit with different transmission rates and that, for each mode, control of the transmission powers of all transmitters is performed.

7. The method according to any one of claims 1 to 6, **characterized in that** the control of the transmission powers of the transmitters is performed on the basis of the computation of the parameters prior to transmission of a signal from the transmitter to the receiver and/or in regular or irregular intervals.

8. The method according to any one of claims 1 to 7, **characterized in that** the multiplex presetting according to which, in the communication system, signals of transmitters of group of a plurality of transmitters are transmitted in packets to a receiver assigned to this group, is a random access presetting.

**Revendications**

1. Procédé de commande de la puissance d'émission à laquelle, dans un système de communication, des signaux d'émetteurs d'un groupe de plusieurs émetteurs sont transmis par paquets à des récepteurs associés à ce groupe selon une consigne multiplex, où dans le procédé

   - les puissances d'émission auxquelles émettent les émetteurs du groupe se situent à l'intérieur d'une plage de puissance d'émission globale, et
   - un paramètre qui indique le niveau de la puissance d'émission à laquelle émet l'émetteur concerné est associé à chaque émetteur,

   **caractérisé en ce que**

   - le paramètre est calculé à l'aide d'un nombre aléatoire ainsi qu'à l'aide de valeurs de probabilité de celui-ci pour déterminer le nombre d'émetteurs du groupe émettant chacun à une puissance d'émission qui se situe à l'intérieur de différents segments de puissance d'émission prédéterminables, eux-mêmes également situés dans la plage de puissance d'émission globale.

2. Procédé selon la revendication 1, **caractérisé en ce que**, dans le procédé,

   - on met à disposition un premier tableau dans lequel sont indiqués différents segments de puissance d'émission de la plage de puissance d'émission globale définis respectivement par une valeur limite inférieure et une valeur limite supérieure,
   - on met à disposition un second tableau qui contient, pour chaque segment de puissance d'émission, une valeur de probabilité statistique qui indique le nombre d'émetteurs qui émettent à une puissance d'émission se situant à l'intérieur du segment de puissance d'émission concerné,
   - chaque valeur de probabilité du second tableau étant associée à un autre segment de puissance d'émission, les deux tableaux définissant ainsi la valeur escomptée du nombre d'émetteurs du groupe qui émettent des signaux à une puissance d'émission se situant à l'intérieur du segment de puissance d'émission respectif,
   - pour chaque émetteur, on met à disposition un nombre aléatoire, et ce, soit par l'émetteur lui-même, soit de l'extérieur de l'émetteur, à l'aide duquel des valeurs de probabilité à associer aux émetteurs respectifs sont calculées en tant que ses paramètres associés et on affecte par conséquent à chaque émetteur le segment de puissance d'émission à l'intérieur duquel se situe la puissance d'émission à laquelle émet l'émetteur concerné, et
   - la grandeur de la puissance d'émission à laquelle émet l'émetteur concerné est sélectionnée à l'intérieur du segment de puissance d'émission associé à cet émetteur par un autre calcul s'effectuant à l'aide d'un autre nombre aléatoire.

3. Procédé selon la revendication 1, **caractérisé en ce que** chaque émetteur a une puissance d'émission maximale, **en ce que** chaque émetteur est associé au segment de puissance d'émission à l'intérieur duquel se situe sa puissance d'émission maximale, **en ce que**, pour chaque émetteur, on met à disposition un nombre aléatoire calculé en tenant compte d'une répartition uniforme sur un espace numérique prédéterminable, et ce soit par l'émetteur lui-même, soit de l'extérieur de l'émetteur, à l'aide duquel il est déterminé, en utilisant la valeur de probabilité pour le segment de puissance d'émission associé à l'émetteur concerné, si la puissance d'émission de l'émetteur se situe entre la limite inférieure du segment de puissance d'émission concerné et une puissance d'émission maximale ou entre la limite inférieure de la plage de puissance d'émission globale et sa puissance d'émission maximale.

4. Procédé selon la revendication 1, **caractérisé en ce que** chaque émetteur a une puissance d'émission maximale, **en ce que** chaque émetteur est associé au segment de puissance d'émission à l'intérieur duquel se situe sa puissance d'émission maximale, **en ce que**, pour chaque émetteur, on met à disposition un nombre aléatoire calculé en tenant compte d'une répartition uniforme sur un espace numérique prédéterminable, qui est également réparti statistiquement à l'intérieur de l'espace numérique et peut se situer en particulier entre zéro et un, et **en ce que** l'émetteur concerné

   - lorsque son nombre aléatoire est plus petit que la valeur de probabilité du segment de puissance d'émission auquel l'émetteur est associé, émet à une puissance d'émission qui se situe entre la limite inférieure du segment de puissance d'émission et la puissance d'émission maximale de l'émetteur, et

- lorsque son nombre aléatoire est plus grand que la valeur de probabilité du segment de puissance d'émission ou est égal à la valeur de probabilité du segment de puissance d'émission auquel l'émetteur est associé, émet à une puissance d'émission qui se situe entre la limite inférieure de la plage de puissance d'émission globale et la puissance d'émission maximale de l'émetteur.

5. Procédé selon l'une des revendications 1 à 4, **caractérisé en ce que** les émetteurs peuvent émettre dans des modes différents et **en ce que** s'effectue, pour chaque mode, une commande des puissances d'émission de tous les émetteurs.

6. Procédé selon la revendication 5, **caractérisé en ce que** les émetteurs peuvent émettre avec différentes vitesses de transmission et **en ce que** s'effectue, pour chaque mode, une commande des puissances d'émission de tous les émetteurs.

7. Procédé selon l'une des revendications 1 à 6, **caractérisé en ce que** la commande des puissances d'émission des émetteurs s'effectue à l'aide du calcul des paramètres avant transmission d'un signal de l'émetteur au récepteur et/ou à intervalles réguliers ou irréguliers.

8. Procédé selon l'une des revendications 1 à 7, **caractérisé en ce que** la consigne multiplex selon laquelle sont transmis par paquets, dans le système de communication, des signaux d'émetteurs d'un groupe de plusieurs émetteurs à un récepteur associé à ce groupe, est une consigne d'accès aléatoire.

Fig.1. $\gamma$ vs $E_s/N_0$ und $E_s/N_0$, Histogramm für ein System, bei dem sämtliche Teilnehmer dekodiert werden

Fig.2. $\gamma$ gegenüber $E_s/N_0$ und $E_s/N_0$ Histogramm für ein System, bei dem einige Pakete verlorengehen

Fig.3 Histogramm von $E_s/N_0$ für eine Einstellung, bei dem einige Teilnehmer Regen-Dämpfung erfahren

Fig.4 Histogramm von $E_s/N_0$ für eine Multi-Modus-Einstellung

Fig. 5. $\gamma$ gegenüber $E_s/N_0$ für Beispiel 1. Die unterbrochene Kurve repräsentiert $\gamma$, wenn die Technik gemäß [2] verwendet wird. Die durchgezogene Kurve repräsentiert $\gamma$, wenn die gemäß dieser Erfindung vorgeschlagene Technik verwendet wird.

Fig. 6. $\gamma$ gegenüber $E_s/N_0$ für ein System mit 2 Modi. Der obere Teil der Figur entspricht Modus 1, und der untere Teil entspricht Modus 2.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. DE GAUDENZI ; O. DEL RIO HERRERO.** Advances in Random Access protocols for satellite networks. *International Workshop on Satellite and Space Communications,* 2009

- Satellite Earth Stations and Systems (SES); Air Interface for S-band Mobile Interactive Multimedia (S-MIM); Part 3: Physical Layer Specification, Return Link Asynchronous Access. *ETSI TS 102 721-3*